# EUROPÄISCHE PATENTANMELDUNG

(11) **EP 3 744 799 A1**
(43) Veröffentlichungstag der Anmeldung: **02.12.2020**
(21) Anmeldenummer: 20169989.9
(22) Anmeldetag: 16.04.2020
(51) Int. Cl.: C09D 167/08, C08K 5/098

(54) **LÖSEMITTELHALTIGE BESCHICHTUNGSMASSE FÜR LASUR- UND LACKBESCHICHTUNGEN**

(30) Priorität: 29.05.2019 US 201962853862 P
(71) Anmelder: STO SE & Co. KGaA, 79780 Stühlingen (DE)
(72) Erfinder: MEHARI, Sem, 68163 Mannheim (DE)
(74) Vertreter: Gottschalk, Matthias

(57) **Zusammenfassung**

Lösemittelhaltige Beschichtungsmasse für Lackbeschichtungen, insbesondere für Bautenlacke oder Bestandteile hiervon, enthaltend oder bestehend aus mindestens einem oxidativ trocknenden organischen Bindemittel, ausgewählt aus der Gruppe bestehend aus mindestens einem oxidativ trocknenden mittelöligen und/oder langöligen Alkydharz, insbesondere einem oxidativ trocknenden langöligen Alkydharz, mindestens einem Primärtrockner basierend auf Eisen, insbesondere umfassend oder bestehend aus mindestens einem organischen Salz des Eisens und/oder einer Komplexverbindung des Eisens, insbesondere einem Komplexsalz des Eisens, mindestens einem ersten Sekundärtrockner, insbesondere umfassend oder bestehend aus mindestens einem organischen und/oder anorganischen Salz bzw. einer Verbindung des Zirkoniums, Magnesiums, Calciums, Strontiums, Bariums, Zinks, Lithiums oder Aluminiums, mindestens einem Lösemittel, und gegebenenfalls mindestens einem üblichen Additiv, wobei die Beschichtungsmasse im Wesentlichen frei von amorphem Siliziumdioxid und SiO2-basierten Verbindungen ist.

## Beschreibung

Die vorliegende Erfindung betrifft eine lösemittelhaltige (insbesondere wasserfreie) einkomponentige Beschichtungsmasse für Lasuren und Lackbeschichtungen auf Alkydharz-Basis und ein Beschichtungssystem enthaltend diese lösemittelhaltige Beschichtungsmasse. Auch stellt die erfindungsgemäße Beschichtungsmasse ab auf eine Beschichtung gebildet aus der erfindungsgemäßen Beschichtungsmasse sowie die Verwendung dieser lösemittelhaltigen Beschichtungsmassen für die Herstellung von Lasuren und Lackbeschichtungen.

Lackbeschichtungen für Innen- und Außenanwendungen, beispielsweise auf Metall- oder Holzsubstraten, haben vielfältigen Anforderungen zu genügen. Wünschenswert ist neben einer ansprechenden Optik auch eine hinreichende Widerstandsfähigkeit gegenüber mechanischen Einflüssen. Auch sollen Wettereinflüsse nicht zu Beeinträchtigungen führen. Darüber hinaus wird regelmäßig gefordert, dass sich die diese Beschichtungen liefernden Beschichtungsmassen einfach und unproblematisch applizieren lassen und zudem zügig unter Ausbildung einer glatten, hochwertigen Oberfläche abtrocknen. Insbesondere für Anwendungen in Innenräume wird verstärkt nach Beschichtungsmassen verlangt, die sich durch einen geringen VOC-Gehalt auszeichnen und insbesondere auch geruchsarm sind.

Das Trocknen lösemittelhaltiger Beschichtungsmassen beruht regelmäßig auf physikalischen und chemischen Trocknungs- bzw. Aushärtungsprozessen. Zwecks Initiierung und Forcierung der chemischen, d.h. oxidativen Trocknung mittels Luftsauerstoff setzt man häufig organische Kobaltsalze als sogenannte Primärtrockner zu. Angesichts immer strenger werdender gesetzlicher Vorgaben stellt sich u.a. die Frage, ob derartige Kobalt-basierte Trockner (Sikkative) zukünftig in lösemittelhaltigen Beschichtungsmassen aus toxikologischen Gründen noch verwendet werden können.

Darüber hinaus ist bekannt, dass bei Einsatz derartiger Primärtrockner während des oxidativen Trocknungsprozesses Aldehyde freigesetzt werden. Diese Aldehyde bzw. deren Abbauprodukte tragen mitunter zu einer Geruchsbelästigung bei und sind nicht selten auch aus gesundheitlicher Sicht zuweilen problematisch.

Darüber hinaus verursacht der Einsatz organischer Kobaltsalze als Sikkative besonders bei weißen oder sehr hellen Farbtönen oft beim Trocknen eine gelbliche oder grünliche Farbveränderungen. Als eine Alternative für die Kobalt-Sikkative ist die Verwendung von auf Mangan-basierende Sikkative bekannt. Mangan-Sikkative haben jedoch den Nachteil, dass sie zu Farbtonveränderungen hin zu rötlichen oder rosa Verfärbungen führen können.

Gesundheitlich unbedenkliche, auf Eisen-basierende Primärtrockner führen nicht zu unerwünschten Farbtonveränderungen. Jedoch haben Eisen-Sikkative den Nachteil, dass mit ihnen in Zusammenhang mit den bekannten lösungsmittelhaltigen (wasserfreien) Alkydharz-Systemen keine günstige Trocknungszeiten erreicht werden. Die Trocknungszeiten sind - besonders bei langöligen Alkyden - viel zu lang und für eine praxisgerechte Anwendung nicht akzeptabel.

Ferner werden in solchen Beschichtungsmassen oft Siliziumdioxid - basierte Mattierungsmittel eingesetzt. Siliziumdioxid (SiO2) kann auch aus anderen Gründen in solchen Beschichtungsmassen enthalten sein. Dies ist aus den nachstehend genannten Gründen nachteilig.

Es wäre daher wünschenswert, auf lösemittelhaltige Beschichtungsmassen zurückgreifen zu können, die nicht mehr mit den Nachteilen des Stands der Technik behaftet sind.

Der vorliegenden Erfindung lag daher die Aufgabe zugrunde, lösemittelhaltige Beschichtungsmassen verfügbar zu machen, die Beschichtungen liefern, die schadstoff - und/oder geruchsarm schnell trocknen und sich im Farbton, v.a. Weißfarbton, nicht verändern und die vorzugsweise auf vielfältigen Substratunterlagen leicht appliziert werden können und sich auch für Innenanwendungen eignen.

Es wurde nun gefunden, dass sich die Nachteile der bekannten Beschichtungssysteme überwinden lassen, wenn statt Kobalt- oder Mangan-basierten Sikkativen solche Sikkative eingesetzt werden, die auf Eisen bzw. Eisenverbindungen basieren. Dem stand die Beobachtung entgegen, dass Eisen-basierte Sikkative in lösungsmittelhaltigen (wasserfreien) Alkydharz-Beschichtungssystemen zu langen Trocknungszeiten führen. Es hat sich jedoch überraschend gezeigt, dass die Verwendung von Eisen-basierten Sikkativen auch in lösungsmittelhaltigen Beschichtungsmassen auf Alkydharz-Basis zu keinen Nachteilen bei der Trocknungszeit führt, und zwar dann, wenn die Beschichtungsmasse frei von amorphem Siliziumdioxid und SiO2-basierten Verbindungen ist. Ursache scheint eine nachteilige Wechselwirkung zwischen dem Eisen-basierten Sikkativ und dem SiO2 bzw. SiO2-basierten Verbindungen zu sein, die verstärkt oder speziell bei Abwesenheit von Wasser auftritt.

Demgemäß wurde eine lösemittelhaltige einkomponentige Beschichtungsmasse gefunden, enthaltend oder bestehend aus
- mindestens einem oxidativ trocknenden organischen Bindemittel, ausgewählt aus der Gruppe bestehend aus mindestens einem oxidativ trocknenden kurz-, mittel- oder langöligen Alkydharz, insbesondere einem oxidativ trocknenden langöligen Alkydharz,
- mindestens einem Primärtrockner basierend auf Eisen, insbesondere umfassend oder bestehend aus mindestens einem organischen Salz des Eisens und/oder einer Komplexverbindung des Eisens, insbesondere einem Komplexsalz des Eisens,
- mindestens einem Sekundärtrockner, insbesondere umfassend oder bestehend aus mindestens einem organischen Salz des Zirkoniums, Magnesiums, Calciums, Strontiums, Bariums, Zinks, Lithiums oder Aluminiums und
- gegebenenfalls mindestens einem üblichen Additiv
wobei die Beschichtungsmasse im Wesentlichen frei von amorphem Siliziumdioxid und SiO2-basierten Verbindungen ist.

"Siliziumdioxid-basierend" im Sinne dieser Erfindung heißt ein SiO2-Gewichtsanteil von größer 90 Gew.% bezogen auf die Gesamtmolmasse des betreffenden Stoffes. "Im Wesentlichen frei" heißt in diesem Zusammenhang kleiner 1,0 Gew.% bezogen auf das Gesamtgewicht der Beschichtungsmasse, besser kleiner 0,5 Gew.% bezogen auf das Gesamtgewicht der Beschichtungsmasse, noch besser kleiner 0,1 Gew.% bezogen auf das Gesamtgewicht der Beschichtungsmasse, am besten unter der analytischen Nachweisgrenze beispielsweise mittels XRD und/oder EDX.

In bevorzugten Ausführungsformen der Erfindung enthält die Beschichtungsmasse weniger als 4 Gew.%, vorzugsweise weniger als 2 Gew.% und besonders bevorzugt nicht mehr als 1 Gew.% Wasser, bezogen auf das Gesamtgewicht der Beschichtungsmasse. Besonders bevorzugt ist die Beschichtungsmasse wasserfrei, d. h. sie enthält kein absichtlich zugesetztes Wasser.

Ein Lösungsmittel im Sinne der Erfindung ist jedes für Alkydharz-Zusammensetzungen geeignete Lösungsmittel ausser Wasser.

Die Wirkung der Primärtrockner beruht auf dem redoxaktiven Durchlaufen eines Katalysezyklus, bei dem die Metallkationen mehrere Oxidationsstufen annehmen, und aus dem Luftsauerstoff über Peroxide Radikale gebildet werden.

Bei Eisen-Primärtrocknern funktionieren diese Redoxvorgänge meist in wässrigen (polaren) Systemen gut, dagegen in lösungsmittelhaltigen (wasserfreien) Systemen schlecht bis gar nicht.

Nun hat sich aber überraschenderweise gezeigt, dass nicht die An- bzw. Abwesenheit von Wasser alleine für dieses Verhalten verantwortlich ist, sondern auch die Anwesenheit von SiO2 und SiO2-basierten Verbindungen. An der Oberfläche von SiO2-Partikeln, beispielsweise von amorphen Kieselsäuren, scheint die Reversibilität der Oxidations- und Reduktionsprozesse des Eisens in seinen verschiedenen Oxidationsstufen behindert oder gar blockiert zu sein. Es ist bekannt, dass die Oxidationsstufe 3 des Eisens an SiO2-Oberflächen stabilisiert werden kann. Eine Reduktion zu Fe(ll) ist erschwert.

Geeignete Primärtrockner basierend auf Eisen umfassen organische Salze des Eisens sowie auch Metallseifen des Eisens. Hierbei stellen bevorzugte Metallseifen Salze auf der Basis von kationischen Eisenspezies und Fettsäuren, insbesondere synthetischen Fettsäuren, dar. Exemplarisch seien unter den geeigneten Fettsäuren Hydroxystearate, Behenate, Arachinate, Palmitate und Laurate genannt.

Geeignete Komplexverbindungen des Eisens, insbesondere Komplexsalze, basieren z.B. auf 3,7-Diaza-bicyclo[3.3.1]nonan-Liganden. Exemplarisch sei als besonders geeignet Eisen(2+)-chloro(dimethyl-9,9-dihydroxy-3-methyl-2,4-di-(2-pyridyl)-7-(pyridin-2-ylmethyl)-3.7-diazabicyclo[3.3.1]nonan-1,5-dicarboxylat)-chlorid genannt. Dessen Herstellung ist in WO 2011095308 A1 offenbart.

Auf Eisen basierende Primärtrockner sind kommerziell erhältlich, beispielsweise von der Herstellerfirma Borchers GmbH.

Der Gehalt an Eisen-Primärtrockner liegt generell (in Bezug auf Metallanteil) bei 0,0001 - 0,3 Gew.%, besser 0,0001 - 0,1 Gew.% , noch besser 0,0001 - 0,05 Gew.%.

Es hat sich gezeigt, dass in lösungsmittelhaltigen einkomponentigen Beschichtungsmassen auf Alkydharzbasis bei Verwendung eines Sikkativs umfassend mindestens ein organisches Salz des Eisens und/oder eine Komplexverbindung des Eisens, mit mindestens einem oxidativ trocknenden organischen Bindemittel, ausgewählt aus der Gruppe bestehend aus mindestens einem oxidativ trocknenden mittelöligen und/oder langöligen Alkydharz, insbesondere einem oxidativ trocknenden langöligen Alkydharz, bei guter Trocknungsleistung sehr geruchsarme und verfärbungsfreie Beschichtungen erhalten werden können.

Besonders gute Trocknungsleistungen kombiniert mit ausgeprägter Farbtonstabilität der Beschichtungen gehen im Allgemeinen einher mit der Verwendung von mindestens einem Eisen-Primärtrockner zusammen mit mindestens einem ersten Sekundärtrockner vorzugsweise umfassend mindestens ein organisches und/oder anorganisches Salz oder eine Verbindung des Zirkoniums, Magnesiums, Calciums, Strontiums, Bariums, Zinks, Lithiums oder Aluminiums.

Der Gehalt an Sekundärtrocknern liegt generell (in Bezug auf Metallanteil) bei 0,01 - 3,0 Gew.%, besser 0,05 - 2,0 Gew.% , noch besser 0,1 - 1,6 Gew.%., bezogen auf das Gesamtgewicht der Beschichtungsmasse. Bei Verwendung eines ersten und eines zweiten Sekundärtrockners liegen deren Gehalte jeweils bei der Hälfte dieser Werte.

Besonders geeignete erfindungsgemäße Beschichtungsmassen umfassen mindestens einen zweiten Sekundärtrockner umfassend oder bestehend aus mindestens einem organischen Salz des Calciums, Zinks, Zirkoniums und einer beliebigen Mischung davon. Besonders zufriedenstellende Resultate stellen sich regelmäßig bei Verwendung eines organischen Salzes des Calciums als sogenannter "Durchtrockner" neben einem organischen Salz des Zirkoniums, einem sogenannten "Hilfstrockner", ein.

Dabei kann in einer besonders geeigneten Ausgestaltung vorgesehen sein, dass das organische Salz der Sekundärtrockner Neodecanoate, Oleate, Stearate, Palmitate, Octoate und /oder Naphthenate, insbesondere Neodecanoate, umfasst, besonders bevorzugt Zirkoniumneodecanoate.

Die erfindungsgemäßen Zusammensetzungen sind vorzugsweise im Wesentlichen frei von Cobalt- und Manganverbindungen, besonders von Sikkativen auf Basis von Cobalt und Mangan. "Im Wesentlichen" bedeutet hier vorzugsweise Cobalt- und Mangan-Gehalte (in Bezug auf Metallanteil) von unterhalb 0.01 Gew.%, spezieller von weniger als 0.001 Gew.%, bezogen auf das Gesamtgewicht der Zusammensetzung. Besonders bevorzugt enthalten die Zusammensetzungen keine mit üblichen analytischen Verfahren wie EDX, WDX und/oder AAS nachweisbaren Gehalte an Cobalt- oder Mangan-Verbindungen.

Für das oxidativ trocknende organische Bindemittel greift man bevorzugt zurück auf solche Bindemittel, die ausgewählt sind aus der Gruppe aus mindestens einem oxidativ trocknenden mittelöligen und/oder langöligen Alkydharz, insbesondere einem oxidativ trocknenden langöligen Alkydharz, mindestens einem oxidativ trocknenden modifizierten, insbesondere isocyanatmodifizierten oder aminmodifizierten mittelöligen und/oder langöligen Alkydharz, insbesondere einem oxidativ trocknenden modifizierten langöligen Alkydharz, und einer beliebigen Mischung hiervon.

Der Alkydharzgehalt der Zusammensetzung (ggf. einschliesslich thixotropem Alkydharz) liegt generell bei 10 - 80 Gew.%, besser 12 - 60 Gew.% , noch besser 14 - 50 Gew.%, bezogen auf Gesamtgewicht der Zusammensetzung.

In einer besonders zweckmäßigen Ausgestaltung wird auf die oxidativ trocknenden langöligen Alkydharze zurückgegriffen. Unter einem langöligen Alkydharz sollen im Sinne der vorliegenden Erfindung solche langöligen Systeme verstanden werden, die einen Ölgehalt bzw. eine Öllänge oberhalb von 60% aufweisen. Unter einem kurzöligen Alkydharz soll demgegenüber eine solche kurzölige Verbindung verstanden werden, die über einen Ölgehalt bzw. eine Öllänge regelmäßig im Bereich von 20-40% liegt. Unter dem Ölgehalt bzw. der Öllänge soll hierbei in Bezug auf das Gesamtgewicht des Alkydharzes der gewichtsprozentige Anteil derjenigen Fettsäuren, einschließlich Polyolrest verstanden werden, die mit den Hydroxylgruppen der Polyoleinheit im Alkydharz verbunden vorliegen. Im Sinne der vorliegenden Erfindung werden dadurch die Begriffe "Ölgehalt" und "Öllänge" synonym verwandt.

Besonders geeignete erfindungsgemäße Beschichtungsmassen enthalten ferner neben dem mindestens einem oxidativ trocknenden organischen Bindemittel, ausgewählt aus der Gruppe bestehend aus mindestens einem oxidativ trocknenden mittelöligen und/oder langöligen Alkydharz , mindestens ein oxidativ trocknendes modifiziertes mittelöliges und / oder langöliges Alkydharz. Bevorzugte oxidativ trocknende modifizierte mittelölige und langölige Alkydharze können dabei ausgewählt sein aus der Gruppe bestehend aus silikonisierten Alkydharzen, acrylierten Alkydharzen, Isocyanat-modifizierten Alkydharzen und beliebigen Mischungen hiervon.

Des Weiteren kann im Zusammenhang mit dem Langölanteil der oxidativ trocknenden langöligen Alkydharze vorgesehen sein, dass diese auf Linolsäure, Linolensäure und / oder Ölsäure basieren, gegebenenfalls unter Zusatz von Palmitinsäure. Unter den oxidativ trocknenden langöligen Alkydharzen sind diejenigen besonders bevorzugt, um die der Erfindung zugrunde liegenden Aufgabe zu lösen, die, ermittelt gemäß DIN 53241-1, eine Jodzahl nicht größer als 120, insbesondere nicht größer als 100, bevorzugt im Bereich von 20 bis 120 oder 20 bis 100, bevorzugt im Bereich von 40-80 aufweisen, jeweils bezogen auf 100% Festkörper des Bindemittels.

Die lang- / mittelöligen Alkydharze werden häufig gelöst in Kohlenwasserstoffen, insbesondere in entaromatisieren oder isoparaffinische Kohlenwasserstoffen, in den erfindungsgemäßen Beschichtungsmassen eingesetzt.

Als Lösemittel für die erfindungsgemäße lösemittelhaltige Beschichtungsmasse wird bevorzugt mindestens ein, insbesondere im Wesentlichen aromatenfreier, aliphatischer Kohlenwasserstoff eingesetzt, vorzugsweise aus der Gruppe bestehend aus, insbesondere entaromatisiertem Testbenzin, n-Paraffinen, Isoparaffinen, Cycloparaffinen und beliebigen Mischungen Mischungen hiervon. Gegebenenfalls kann auch Methoxypropoxypropanol als Co-Lösemittel zugegeben werden. Besonders bevorzugt kommen entaromatisierte aliphatische Kohlenwasserstoffe zum Einsatz. Das Lösemittel liegt in der erfindungsgemäßen Beschichtungsmasse üblicherweise in einer Menge im Bereich von 1,0 bis 40 Gew.%, vorzugsweise im Bereich von 2,0 bis 35 Gew.% und besonders bevorzugt von 3,0 bis 30 Gew.% vor. Häufig wird insbesondere zur Verbesserung der Verdünnungseigenschaften und zwecks Erhalts einer guten Verarbeitungsviskosität Methoxypropoxypropanol als Co-Lösemittel zugesetzt, beispielsweise in einer Menge im Bereich von 0,5 bis 8 Gew.%, vorzugsweise im Bereich von 1 bis 5 Gew.%.

Als aromatenfrei im Sinne der vorliegenden Erfindung sollen solche Lösemittel bzw. Kohlenwasserstoffe verstanden werden, die gemäß der Definition TRGS900 zur TRGS 900 Gruppe 1 gehören. Gemäß der VDL Richtlinie Bautenanstrichstoffe (Richtlinie zur Deklaration von Inhaltsstoffen in Bautenlacken, Bautenfarben und verwandten Produkten) VDL-RL01 (6.Revision) des Verbands der deutschen Lack- und Druckfarbenindustrie e.V. sollen insbesondere auch solche Lösemittel bzw. aliphatische Kohlenwasserstoffe aromatenfrei im Sinne der vorliegenden Erfindung verstanden werden, die zu Beschichtungen aus den erfindungsgemäßen Beschichtungsmassen führen, welche einen Aromatengehalt kleiner 1 Gew.%, bestimmt nach DIN 55683, aufweisen. Ganz bevorzugt sollen im Sinne der vorliegenden Erfindung unter aromatenfrei solche Lösemittel bzw. aliphatischen Kohlenwasserstoffe verstanden werden, die einen Aromatengehalt kleiner 0,2 Gew.% vorzugsweise kleiner 0,1 Gew.% besitzen.

Vorteilhafte erfindungsgemäße Beschichtungsmassen zeichnen sich auch dadurch aus, dass sie ferner mindestens ein Hautverhinderungsmittel enthalten. Die Hautverhinderungsmittel wirken üblicherweise als Reduktions- oder Komplexierungsmittel und verhindern die frühzeitige Aushärtung der Beschichtungsmasse an der Oberfläche in den Gebinden. Bevorzugte Hautverhinderungsmittel können dabei ausgewählt werden aus der Gruppe bestehend aus substituierten Phenolen, Dialkylaminoethanol, insbesondere Dimethylaminoethanol und/oder Diethylaminoethanol, Dialkylhydroxylamin, insbesondere Dimethylhydroxylamin und/oder Diethylhydroxylamin, Dibenzylhydroxylamin, Hydroxylamin, Diethylamin, Triethylamin, Ketoxime, insbesondere Acetonoxim, Butanonoxim, Pentanonoxim und beliebigen Mischungen hiervon.

Der Gehalt an Hautverhinderungsmittel, Mattierungsmittel, Lichtschutzmittel, Radikalfänger, etc. in der Zusammensetzung liegt generell bei 0,1 - 8,0 Gew.%, besser 0,2 - 6,0 Gew.% , noch besser 0,3 - 5,0 Gew.%, bezogen auf das Gesamtgewicht der Zusammensetzung.

Für einige Anwendungen hat es sich als zweckmäßig erwiesen, die erfindungsgemäße Beschichtungsmasse mit mindestens einem Rheologiemodifizierungmittel auszustatten. Bevorzugt werden keine Verdicker eingesetzt ausgewählt aus der Gruppe bestehend aus modifizierten und unmodifizierten Schichtsilikaten, wie Bentoniten. Bevorzugt wird unter den Rheologiemodifizierungsmitteln auf thixotrope Alkydharze zurückgegriffen.

Unter thixotropen Alkydharzen im Sinne der vorliegenden Erfindung fallen z.B. solche Alkydharze, die aus einer partiellen Umsetzung von Polyamiden aus polymeren Fettsäuren und Polyaminen mit Alkylharzen herrühren, sogenannte Polyamid-modifizierte Alkydharze. Ferner können Polyharnstoff-modifizierte Alkydharze, auch Polyharnstoffthixotropierte Alkydharze genannt, als thixotrope Alkydharze im Sinne der Erfindung eingesetzt werden. Exemplarisch sei auf geeignete thixotrope Alkydharze verwiesen, wie sie in der EP 922738B1 beschrieben sind. Mithilfe dieser Rheologiemodifizierungsmittel, insbesondere mithilfe von thixotropierten Alkydharzen lässt sich die Standfestigkeit der mit den erfindungsgemäßen Beschichtungsmassen erhaltenen Beschichtungsfilme nochmals verbessern.

Der Gehalt an thixotropem Alkydharz liegt generell bei 0,1 - 20 Gew.%, besser 0,5 - 15 Gew.% , noch besser 1,0 - 12 Gew.%, bezogen auf Gesamtgewicht der Zusammensetzung, vorzugsweise als Teil des Gesamtgehaltes an Alkydharz.

Für eine Reihe von Anwendungen können die erfindungsgemäßen Beschichtungsmassen ferner über mindestens einen Füllstoff verfügen insbesondere ausgewählt aus der Gruppe bestehend aus Carbonaten, insbesondere Calciumcarbonat, Magnesiumcarbonat und Dolomit, Sulfaten, insbesondere Bariumsulfat, und Oxiden wie Aluminiumoxid sowie deren Mischungen davon. Die erfindungsgemäßen Beschichtungsmassen müssen im Wesentlichen frei sein von auf Siliziumdioxid-basierenden, amorphen Füllstoffen wie Kieselsäure, Kieselgel, amorphes SiO2, Mikrosilica und / oder Gläser, die auch als Mattierungsmittel eingesetzt werden. Vorteilhaft ist es auch, wenn keine auf SiO2-basierenden, kristallinen Füllstoffe wie Quarz oder Cristobalit enthalten sind, wenn diese Füllstoffe in sehr feiner Form vorliegen, d. h. mit einem mittleren Teilchengrößenwert D50 von kleiner 10 µm (bestimmt nach ISO 13320). Ähnliches gilt für andere silikatische Füllstoffe, insbesondere Silikate, sowie Feldspat, Pyrophyllit und Serpentin, deren Mischungen, wenn deren Siliziumdioxid-Gehalt größer als 60 Gew.% bezogen auf die Molmasse des silikatischen Füllstoffs ist.

Für eine Reihe an Ausführungsformen der erfindungsgemäßen Beschichtungsmassen lassen sich mit diesen matte Beschichtungen erhalten. Vielfach hat es sich jedoch als vorteilhaft erwiesen, ein mattes Erscheinungsbild der Beschichtungsoberfläche dadurch zu erhalten, dass man der erfindungsgemäßen Beschichtungsmasse ferner mindestens ein Mattierungsmittel zugibt. Als Mattierungsmittel werden im Allgemeinen häufig Kieselsäure, insbesondere Fällungskieselsäure, pyrogene Kieselsäure, amorphe Kieselsäure und besonders bevorzugt nachbehandelte Fällungskieselsäure verwendet. Diese Kieselsäuren dürfen in der erfindungsgemäßen Beschichtungsmasse nicht enthalten sein. Die erfindungsgemäße Beschichtungsmasse soll im Rahmen der analytischen Nachweisgrenze frei von diesen SiO2-Verbindungen sein. Als Mattierungsmittel eignen sich bevorzugt Wachse, insbesondere Polyolefin-Wachse wie Polyethylen- oder Polypropylen-Wachse, vorzugsweise mit einer Teilchengröße D90, bestimmt nach ISO 13320, im Bereich 5 - 15 µm. Solche Wachse werden mit Gehalten von 0,2 - 7,5 Gew.%, besser 0,3 - 5,5 Gew.%, noch besser 0,4 - 4.5 Gew%, bezogen auf das Gesamtgewicht der Zusammensetzung, eingesetzt.

Zwecks geeigneter Farbeinstellung sind die erfindungsgemäßen Beschichtungsmassen in der Regel alternativ oder zusätzlich auch mit mindestens einem Farbmittel versetzt. Unter den Farbmitteln greift man bevorzugt auf Pigmente (Weiß- oder Buntpigmente) zurück. Unter den Weißpigmenten ist Titandioxid bevorzugt.

Der Gehalt an Pigmenten / Farbstoffen liegt generell bei
0,1 - 50 Gew.%, besser 0,2 - 45 Gew.% , noch besser 0,5 - 40 Gew.%, bezogen auf das Gesamtgewicht der Zusammensetzung.

Erfindungsgemäße Zusammensetzungen weisen vorzugsweise eine Pigment-Volumen-Konzentration (PVK) gemäß EN ISO 4618-1 von 0 bis 50%, mehr bevorzugt 2 bis 45%, besonders bevorzugt 4 bis 40% auf.

In einer zweckmäßigen Ausgestaltung der erfindungsgemäßen Beschichtungsmassen sind die Additive ausgewählt aus der Gruppe bestehend aus Entschäumern, Entlüfter, Verdickern, Lichtschutzmittel, Radikalfängern, Netz- / Dispergiermitteln, Gleit- / Verlaufsadditiven, Oberflächenadditiven, insbesondere Silikonoberflächenadditiven, beispielsweise polyethermodifiziertes Polymethylalkylsiloxan und /oder Silikonpolyether-Copolymere und/oder oberflächenaktive Polyacrylate, Wachse und /oder oberflächenaktive Polyacrylate und beliebigen Mischungen dieser Verbindungen. Als geeignete Lichtschutzmittel kann man sogenannte HALS-Verbindungen (hindered amine light stabilizers) verwenden. Diese Verbindungen ermöglichen häufig eine sehr gute Wetterstabilität und nicht selten geht mit diesen auch eine reduzierte Kreidungsneigung einher. Lichtschutzmittel können z.B. in einer Menge im Bereich von 0,1 bis 2,0 Gew.%, vorzugsweise im Bereich 0,2 bis 1,0 Gew.%, jeweils bezogen auf das Gesamtgesicht der Beschichtungsmasse eingesetzt werden.

Netz- und Dispergiermittel können den erfindungsgemäßen Beschichtungsmassen zugesetzt werden, um die Pigmente und /oder Füllstoffe zu stabilisieren und um beispielsweise ein Sedimentieren von Pigmenten und Füllstoffen zu verhindern. Netz- und Dispergiermittel tragen regelmäßig dazu bei, dass die Pigmente und / oder Füllstoffe nicht reagglomerien. Über den Zusatz an Netz- und Dispergiermitteln kann man zu einer verbesserten Lagerstabilität gelangen. Auch kann die Dispergierbarkeit verbessert werden, indem man mit Hilfe von Netz- und Dispergiermitteln die Pigmente stabilisiert bzw. eine Agglomeration verhindert. Des Weiteren können die Netz- und /oder Dispergiermittel zum Beispiel zu einem verbesserten Deckvermögen verhelfen. Geeignete Netzmittel umfassen beispielsweise die Salze ungesättigter Polyamide und / oder die Salze von sauren Polyestern, insbesondere von niedermolekularen sauren Polyestern.

Als Entschäumer können beispielsweise Polysiloxane eingesetzt werden. Geeignete schaumzerstörende bzw. schaumunterbindende Polysiloxane sind dem Fachmann bekannt.

Die erfindungsgemäßen Beschichtungsmassen eignen sich vor allem für den Einsatz als Bautenlacke oder als Bestandteil hiervon. Es kann sich bei der erfindungsgemäßen Beschichtungsmasse um eine Grundierung, Decklackbeschichtungsmasse oder eine transparente oder semitransparente Endbeschichtungsmassen oder einen Bestandteil hiervon handeln. Diese Beschichtungsmassen kommen im Innen- und /oder Außenbereich zum Einsatz.

Die erfindungsgemäße Beschichtungsmasse kann als sogenannte 1-Topf-Beschichtungsmassen eingesetzt werden. Sie kann dabei sowohl als Grundierung, als auch als Mittelschicht als auch als Schlussbeschichtung verwendet werden. Von besonderem Vorteil ist auch, dass die erfindungsgemäßen Beschichtungsmassen vollständig ohne Sikkative auf Kobalt- und/oder Bleibasis auskommen, gleichwohl ein hervorragendes Trocknungsprofil zeigen. Mit den erfindungsgemäßen Beschichtungsmassen gelangt man zu sehr lagerstabilen Systemen, die auch nach längerer Lagerzeit nicht zur Gelierung neigen.

Zusammensetzung Beschichtungsmasse allgemein:
Alkydharz
   10 - 80 Gew.%, besser 12 - 60 Gew.% , noch besser 14 - 50 Gew.%
Alkydharz thixotrop
   0,1 - 20 Gew.%, besser 0,5 - 15 Gew.% , noch besser 1,0 -12 Gew.%
Füllstoffe
   0 - 40 Gew.%, besser 0 - 35 Gew.% , noch besser 0 - 30 Gew.%
Pigmente / Farbstoffe
   0,1 - 50 Gew.%, besser 0,2 - 45 Gew.% , noch besser 0,5 - 40 Gew.% Additive: Netz- / Dispergiermittel, Entlüfter, Entschäumer, Gleit- / Verlaufsadditive, Hautverhinderungsmittel, Mattierungsmittel, Lichtschutzmittel, Radikalfänger, etc.
   0,1 - 8,0 Gew.%, besser 0,2 - 6,0 Gew.% , noch besser 0,3 - 5,0 Gew.% Lösemittel
   1,0 - 40 Gew.%, besser 2,0 - 35 Gew.% , noch besser 3,0 - 30 Gew.% Eisen-Primärtrockner (in Bezug auf Metallanteil)
   0,0001 - 0,3 Gew.%, besser 0,0001 - 0,1 Gew.% , noch besser 0,0001 - 0,05
   Gew.%
Sekundärtrockner (in Bezug auf Metallanteil)
   0,01 - 3,0 Gew.%, besser 0,05 - 2,0 Gew.% , noch besser 0,1 - 1,6 Gew.%

### Ausführungsbeispiel 1:

### Weißlack seidenmatt: erfindungsgemäß

| | |
|---|---|
| Alkydharz | 24 Gew.% |
| Alkydharz thixotrop | 2 Gew.% |
| Füllstoffe | 16 Gew.% |
| Pigmente / Farbstoffe | 32 Gew.% |
| Additive: Netz-/ Dispergiermittel, Entlüfter, Entschäumer, Gleit- / Verlaufsadditive, Hautverhinderungsmittel, Lichtschutzmittel, Radikalfänger, etc. | 4,8 Gew.% |
| Mattierungsmittel (PE-Wachs) | 3,0 Gew.% |
| Lösemittel | 17,8 Gew.% |
| Eisen-Primärtrockner (in Bezug auf Metallanteil) | 0,0003 Gew.% |
| Zirconium-Sikkativ (Hilfstrockner) | 0,2 Gew.% |
| Calcium-Sikkativ (Durchtrockner) | 0,2 Gew.% |

Als Referenzbeispiel 1 wurde in der erfindungsgemäßen Rezeptur für den Weißlack seidenmatt das Mattierungsmittel Polyethylen-Wachs gegen amorphe Kieselsäure ausgetauscht.

Ferner diente eine analoge Beschichtungsmasse enthaltend anstelle des Eisen-Primärtrockners einen herkömmlichen Kobalt-Primärtrockner in üblicher Einsatzmenge als Referenzbeispiel 2.

Die Beschichtungsmassen (erfindungsgemäß, Referenzbeispiel 1 und Referenzbeispiel 2) wurden mit einem 75µm Rakel aufgezogen und mit einem Drying Recorder untersucht. Die erfindungsgemäße Beschichtungszusammensetzung und das Referenzbeispiel 2 waren nach 3,5 Stunden ausreichend getrocknet. Beim Referenzbeispiel 1 dagegen war nach 24 Stunden immer noch keine Trocknung festzustellen, die Untersuchung wurde abgebrochen.

### Ausführungsbeispiel 2:

### Flächenlasur weiß: erfindungsgemäß

| | |
|---|---|
| Alkydharz | 34 Gew.% |
| Alkydharz thixotrop | 12 Gew.% |
| Pigmente / Farbstoffe | 8 Gew.% |
| Additive: Netz-/ Dispergiermittel, Entlüfter, Entschäumer, Gleit- / Verlaufsadditive, Hautverhinderungsmittel, Lichtschutzmittel, Radikalfänger, etc. | 3,6 Gew.% |
| Mattierungsmittel | 2,0 Gew.% |
| Lösemittel | 40 Gew.% |
| Eisen-Primärtrockner (in Bezug auf Metallanteil) | 0,0004 Gew.% |
| Zirconium-Sikkativ (Hilfstrockner) | 0,25 Gew.% |
| Calcium-Sikkativ (Durchtrockner) | 0,15 Gew.% |

Die aus den erfindungsgemäßen Beschichtungsmassen erhaltenen Beschichtungen zeigen keine Verfärbungstendenzen. Auch ist von praktischer Relevanz, dass sich mit den erfindungsgemäßen Beschichtungsmassen Filmhärten einstellen lassen, wie sie sich üblicherweise bei Einsatz herkömmlicher Kobalt-basierter Primärtrockner einstellen. Darüber hinaus ist es mit den erfindungsgemäßen Beschichtungsmassen möglich, zu VOC-Werten unterhalb von 500 g/L zu gelangen. Beispielsweise gelangt man mit den erfindungsgemäßen Beschichtungsmassen für dekorative Anwendungen sogar zu VOC-Werten unterhalb von 300 g/L. Für die Bestimmung des Gehalts an flüchtigen organischen Verbindungen (VOC-Gehalt) kann auf die Norm DIN EN ISO 11890-1 (September 2007) zurückgegriffen werden.

## Patentansprüche

1. Lösemittelhaltige Beschichtungsmasse für Lackbeschichtungen, insbesondere für Bautenlacke oder Bestandteile hiervon, enthaltend oder bestehend aus
mindestens einem oxidativ trocknenden organischen Bindemittel, ausgewählt aus der Gruppe bestehend aus mindestens einem oxidativ trocknenden mittelöligen und/oder langöligen Alkydharz, insbesondere einem oxidativ trocknenden langöligen Alkydharz,
mindestens einem Primärtrockner basierend auf Eisen, insbesondere umfassend oder bestehend aus mindestens einem organischen Salz des Eisens und/oder einer Komplexverbindung des Eisens, insbesondere einem Komplexsalz des Eisens,
mindestens einem ersten Sekundärtrockner, insbesondere umfassend oder bestehend aus mindestens einem organischen und/oder anorganischen Salz bzw. einer Verbindung des Zirkoniums, Magnesiums, Calciums, Strontiums, Bariums, Zinks, Lithiums oder Aluminiums,
mindestens einem Lösemittel, und
gegebenenfalls mindestens einem üblichen Additiv,
wobei die Beschichtungsmasse im Wesentlichen frei von amorphem Siliziumdioxid und SiO2-basierten Verbindungen ist.

2. Beschichtungsmasse nach Anspruch 1, ferner umfassend
mindestens einen zweiten Sekundärtrockner umfassend oder bestehend aus mindestens einem organischen Salz des Calciums, Zinks, Zirkoniums und einer beliebigen Mischung hiervon, wobei der erste und der zweite Sekundärtrockner unterschiedlich sind.

3. Beschichtungsmasse nach Anspruch 1 oder 2, die im Wesentlichen frei von Cobalt- und Manganverbindungen, besonders von Sikkativen auf Basis von Cobalt und Mangan ist.

4. Beschichtungsmasse nach einem der vorangehenden Ansprüche, **dadurch gekennzeichnet, dass** das oxidativ trocknende organische Bindemittel ferner mindestens einen oxidativ trocknenden modifizierten mittelöligen und/oder langöligen Alkydharz, insbesondere ausgewählt aus der Gruppe bestehend aus silikonisierten Alkydharzen, acrylierten Alkydharzen, Isocyanat-modifzierten Alkydharzen und beliebigen Mischungen hiervon, insbesondere Isocyanat-modifzierte langölige Alkydharze, umfasst.

5. Beschichtungsmasse nach einem der vorangehenden Ansprüche, **dadurch gekennzeichnet, dass** das Lösemittel, insbesondere aromatenfreie, aliphatische Kohlenwasserstoffe, vorzugsweise ausgewählt aus der Gruppe bestehend aus, insbesondere entaromatisiertem Testbenzin, n-Paraffinen, Isoparaffinen, Cycloparaffinen und beliebigen Mischungen hiervon, umfasst oder hieraus besteht und vorzugsweise Methoxypropoxypropanol als Co-Lösemittel enthält.

6. Beschichtungsmasse nach einem der vorangehenden Ansprüche, **dadurch gekennzeichnet, dass** das Additiv ausgewählt ist aus der Gruppe bestehend aus Entschäumern, Lichtschutzmitteln, Radikalfängern, Netzmitteln, Dispergiermitteln, Oberflächenadditiven, insbesondere Silikonoberflächenadditiven, beispielsweise polyethermodifiziertes Polymethylalkylsiloxan und/oder Silikonpolyether-Copolymere und/oder oberflächenaktive Polyacrylate, Mattierungsmitteln, insbesondere Wachse, und beliebigen Mischungen dieser Verbindungen.

7. Beschichtungsmasse nach einem der vorangehenden Ansprüche, **dadurch gekennzeichnet, dass** das organische Salz des ersten und/oder zweiten Sekundärtrockners Neodecanoate, Oleate, Stearate Palmitate, Octoate und/oder Naphtenate, insbesondere Neodeconoate, umfasst, besonders bevorzugt Zirkonium- und/oder Strontiumneodecanoate.

8. Beschichtungsmasse nach einem der vorangehenden Ansprüche, **dadurch gekennzeichnet, dass** der Langölanteil der oxidativ trocknenden langöliges Alkydharze auf Linolsäure, Linolensäure, Ölsäure und Palmitinsäure, basiert und/oder dass der Mittelölanteil der oxidativ trocknenden mittelöligen Alkydharze auf Linolsäure, Linolensäure und/oder Ölsäure und gegebenenfalls unter Zusatz von Palmitinsäure, insbesondere Linolsäure, Linolensäure, Ölsäure und Palmitinsäure, basiert.

9. Beschichtungsmasse nach einem der vorangehenden Ansprüche, **dadurch gekennzeichnet, dass** die oxidativ trocknenden langöligen Alkydharze, ermittelt gemäß DIN 53241-1, eine Jodzahl nicht größer als 120, insbesondere nicht großer als 100, bevorzugt im Bereich von 20 bis 120 oder 20 bis 100 und besonders bevorzugt im Bereich von 40 bis 80 aufweisen.

10. Beschichtungsmasse nach einem der vorangehenden Ansprüche, **dadurch gekennzeichnet, dass** der Anteil an dem Primärtrockner basierend auf Eisen, in Bezug auf dessen Metallanteil, im Bereich von 0,0001 bis 0,3 Gewichtsprozent, bevorzugt im Bereich von 0,0001 bis 0,1 Gewichtsprozent und besonders bevorzugt im Bereich von 0,0001 bis 0,05 Gewichtsprozent liegt, jeweils bezogen auf das Gesamtgewicht der Beschichtungsmasse, der Anteil an dem mindestens einen ersten Sekundärtrockner umfassend oder bestehend aus mindestens einem organischen Salz des Zirkoniums, Magnesiums, Calciums, Strontiums, Bariums, Zinks, Lithiums und/oder Aluminiums, in Bezug auf dessen Metallanteil, im Bereich von 0,005 bis 1,5 Gewichtsprozent, bevorzugt im Bereich von 0,025 bis 1,0 Gewichtsprozent und besonders bevorzugt im Bereich von 0,05 bis 0,8 Gewichtsprozent liegt, jeweils bezogen auf das Gesamtgewicht an oxidativ trocknendem organischen Bindemitteln, und/oder dass
der Anteil an dem mindestens einen zweiten Sekundärtrockner umfassend oder bestehend aus mindestens einem organischen Salz des Calciums, Lithiums, Zirkoniums und einer beliebigen Mischung, in Bezug auf dessen Metallanteil, hiervon im Bereich von 0,005 bis 1,5 Gewichtsprozent, bevorzugt im Bereich von 0,01 bis 3,0 Gewichtsprozent und besonders bevorzugt im Bereich von 0,025 bis 0,8 Gewichtsprozent liegt, jeweils bezogen auf das Gesamtgewicht an oxidativ trocknendem organischen Bindemitteln, und/oder dass
der Anteil an Lösemittel im Bereich von 1,0 bis 40 Gewichtsprozent, bevorzugt 2,0 bis 35 Gewichtsprozent und besonders bevorzugt im Bereich von 3,0 bis 30 Gewichtsprozent, bezogen auf das Gesamtgewicht der Beschichtungsmasse liegt, wobei die Anteile der die Beschichtungsmasse bildenden Komponenten jeweils stets 100 Gewichtsprozent ergeben.

11. Beschichtungsmasse nach einem der vorangehenden Ansprüche, die weniger als 1 Gew.%, vorzugsweise weniger als 0,5 Gew.%, mehr bevorzugt weniger als 0,1 Gew.% an amorphem Siliziumdioxid und SiO₂-basierten Verbindungen enthält und besonders bevorzugt keinen mittels XRD und/oder EDX nachweisbaren Gehalt an amorphem SiO₂ und SiO₂-basierten Verbindungen aufweist.

12. Beschichtungsmasse nach einem der vorangehenden Ansprüche, mit einer Pigment-Volumen-Konzentration (PVK) gemäß EN ISO 4618-1 von 0 bis 50%, mehr bevorzugt 2 bis 45%, besonders bevorzugt 4 bis 40%.

13. Beschichtung auf einem Substrat, insbesondere Decklackbeschichtung, Grundierungsbeschichtung, Grundierungs-/Decklack-1-Topf-Beschichtung oder transparente oder semitransparente Endbeschichtung, erhalten oder erhältlich durch Auftragen und physikalisches und chemisches Trocknen der Beschichtungsmasse gemäß einem der Ansprüche 1 bis 12.

14. Beschichtung nach Anspruch 13, **dadurch gekennzeichnet, dass** diese über eine durchschnittliche, insbesondere absolute, Trockenschichtdicke, bestimmt gemäß DIN EN ISO 2808-2 (Mai 20017), nicht oberhalb von 100 µm, bevorzugt nicht oberhalb von 80 µm und besonders bevorzugt im Bereich von 5 bis 60 µm verfügt.

15. Verwendung einer Beschichtungsmasse gemäß einem der Ansprüche 1 bis 12 für die Herstellung von Lasuren und Lackbeschichtungen.
